# EUROPEAN PATENT APPLICATION

(11) **EP 1 152 350 A1**
(43) Date of publication of application: **07.11.2001**
(21) Application number: 00303743.9
(22) Date of filing: 04.05.2000
(51) Int. Cl.: G06F 17/30

(54) **Remote selection of data resource**

(71) Applicant: Stratos Global Limited, London EC2V 7JE (GB)
(72) Inventor: Hume, John, Felixstowe, Suffolk (GB); Bailey, John Harrison, Ipswich, Suffolk IP4 SN4 (GB); Turner, Anthony, Stowmarket, Suffolk (GB)
(74) Representative: Skone James, Robert Edmund

(57) **Abstract**

A method and apparatus for providing a remote user with a selected data resource, such as a picture or video clip, via a low bandwidth link, which is capable of carrying only basic data. An identity code representing the data resource is transmitted which references a duplicate data resource held in a library by the remote user. The system has been developed specifically for illustrating news articles transmitted as part of an airline information service.

## Description

The present invention concerns providing a remote user with a selected data resource, such as an image, video clip or sound file, via a low bandwidth link, as an alternative to sending the data resource itself via a high bandwidth link.

There is an interest in employing low bandwidth communication channels, such as channels usually provided for link diagnosis traffic, to provide a remote user with data rich material. The bandwidth restriction allows only material of a basic nature, such as short text messages, to be transmitted. It is desirable to provide the user with elaborate data, such as a picture, to complement the basic textual material.

According to the present invention there is provided a method of presenting a selected data resource to a remote user, the method comprising:
selecting a data resource held in a first data resource library,
identifying an identity code of the selected data resource,
transmitting the identity code of the selected data resource and other data to a remote user,
retrieving a data resource having an associated identity code corresponding to the transmitted identity code from a second data resource library held by the remote user,
presenting the retrieved data resource and the other data to the remote user.

The other data transmitted with the identity code of the selected data resource is preferably mainly textual in nature, with a small portion representing formatting data. In a preferred embodiment of the invention, the retrieved data resource is presented in composite form with textual material which may be transmitted with the identity code or may be obtained from another source. Preferably, a data resource is identified automatically when upon selection by an operator, the identity of the data resource then being stored in a memory prior to transmission. The data resource mentioned comprises a large volume of data such as an image or video clip or sound file.

Transmission of data takes place preferably via a satellite communication channel, although the method is suited to any communication link where the remote user is mobile or data transmission rates are restricted. A preferred embodiment of the present invention is where the remote user is located in an aircraft. The method would also be suited to a remote user located on board a ship, for example.

Preferably, the satellite communication channel used is a non commercial diagnostic channel.

The invention also relates to apparatus for presenting a selected data resource to a remote user, using a low bandwidth link, the apparatus comprising:
a base station having a first data resource library, wherein each data resource component of the first data resource library has an identity code,
a remote station having a second data resource library, wherein each data resource component of the second data resource library has an identity code, such that matching data resources held in the first and second data resource library have matching identity codes,
means for transmitting the identity code of a selected data resource held in the first data resource library and other data to the remote station.

The invention will now be described by way of example only with reference to the accompanying drawing, in which:
Figure 1 is a schematic representation of the operation of a remote news provision facility, forming a component of an airline information service.
Figure 2 is a flow diagram of the operational stages of news transmission.
Figure 3 is a flow diagram of the operational stages of news reception.

An airline information service has been devised, whereby passengers on board an aircraft are provided with an interface via which various material may be accessed, such as destination guides, in-flight entertainment synopses, video games and, in particular, a news service. News is remotely updated from a ground based news provider and hence delivers 'real time' news stories. The service is accessible to any customer, with the appropriate software, logged onto a service known as 'Skyphone', a satellite communication system specifically for aircraft passengers.

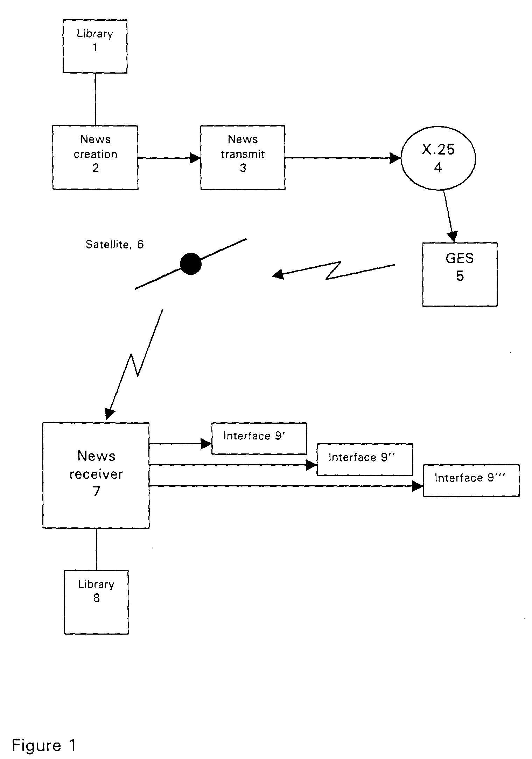

Figure 1 gives a general idea of the various elements involved in providing the on-board news service. A ground based news provider is charged with sourcing news articles and preparing them in a format suitable for transmission. The news provider is provided with a news creation tool 2 for compiling news articles, and a news transmitting tool 3 for preparing the data for transmission. Prepared news articles are then forwarded to each of four Ground Earth Stations 5 (only one shown). The Ground Earth Station 5 sends the news articles to a satellite 6 from which data is broadcast to any number of aircraft. Data is compiled into newspaper files by an on-board news receiver 7 which may then be accessed at leisure by a passenger using a passenger interface 9', 9", 9''' etc. provided throughout the aircraft.

The news system is viable because use is made of a low bandwidth control channel, known as the P channel, which is provided for diagnostic purposes in the INMARSAT satellite system. The P channel has a low traffic load, and airtime on this channel may be obtained by Skyphone customers at minimal cost. News articles are particularly suited to transmission on this low bandwidth channel as they typically consist of a few lines of text and delivery of such text data is not time critical, i.e. data packets may be held at various stages of transmission without disrupting the final service.

It has been noted that this service may be enhanced somewhat for the user by complementing news articles with, for example, pictures, sounds or video clips. However, the nature of the P channel allows data to be transmitted at only 900 bits per second, prohibiting the transmission of the kilobytes of data that make up a sound or image file. In order to overcome this restriction a system has been devised wherein the news provider has access to a library 1 of images, video clips, sound files etc, each item in the library 1 having an identity code. An equivalent library 8 is provided at the news receiver 7 on board an aircraft, wherein each library item available to the news provider is duplicated and given an identity code identical to its counterpart in the news receiver's library 8. An operator at the news provider's premises selects the illustrating item from the library 1 that is deemed most appropriate for a particular news article and the identity code of the illustration is included with the news article for transmission to the news receiver 7. Upon reception by the news receiver 7 the news article is stored with the illustration identity code. When the particular news item is accessed by a passenger, the news item is displayed and the illustration corresponding to the identity code attached to the news item is retrieved from the news receiver's library 8. The selected illustration may either be displayed or made available for display via passenger interfaces 9' etc which are available for use throughout the aircraft. It will be appreciated that the concept of employing a library at the transmission and reception stages of a data transmission system in order to reduce the quantity of data transmitted is not restricted to the application described herein, i.e. of illustrating news articles broadcast to aircraft. The technique is particularly suited to situations where data transmission rates are restricted, such as mobile communication systems. However, the technique may find application in high bandwidth communication systems where most of the bandwidth is required to transmit other data.

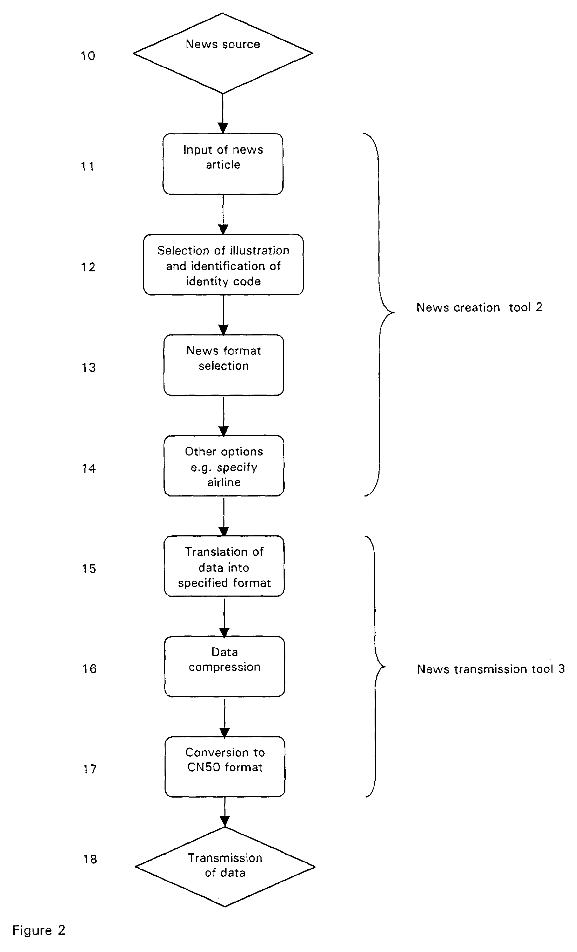

In the example application of news provision used herein, the news provider 1 is charged with essentially two operations, which are illustrated in Figure 2. Firstly, a news article is sourced by an operator, stage 10, who uses a news creation tool 2 to prepare the article, stage 11, and to gather various other data to accompany the news transmission itself. In particular, at stage 12, the operator selects an appropriate illustration of the news article from the library 1 and an identity code of the selected illustration is recorded by news creation software run by a news creation tool 2 to be included in the eventual transmission of the gathered data. The identity code may be recorded automatically by the news creation software when the illustration is selected or the code may be entered manually by the operator. An appropriate illustration may take the form of an image, video clip or sound clip, for example. The library 1 of illustrations, or 'data resources' may be held on suitable permanent memory media such as CD ROM and updated periodically by replacing the CD ROM both at the news provider and at the on-board news receiver 7. An identity code may take the form of a discrete code associated with the illustration or may be derived from the data representing the illustration itself. A further option may be to have the news creation software 3,4 and library 1 at a central location and for the operator to gain access to these tools remotely, over the internet for example. This option would be useful in the case where there was more than one news provider.

A facility may be provided for selecting the format of a news article to be transmitted, stage 13. News items may be categorised simply as 'news', 'sports news' and 'finance news' or a more complex system using a larger number of categories may be used, for instance to distinguish news items from particular global regions. Further options may be included, stage 14, for instance news articles may be directed to particular recipients or groups of recipients. Each news article is further given an identification code for housekeeping purposes.

The second function of the news provider is to process the data gathered by the operator of the news creation tool 2. The text, illustration identity code, article category, article ID and any other option codes are prepared for transmission by a news transmitting tool 3, running on a Sun workstation for example. Initially, a news article is prepared in a format that will be recognised by the onboard news receiver 7, stage 15 and then translates the article into the format recognised by the news transmitting system 4,5, stage 17. Data may also be compressed, stage 16. Several formats exist for the transmission of news articles, although they all share the same basic features. An example format is represented below in table 1.

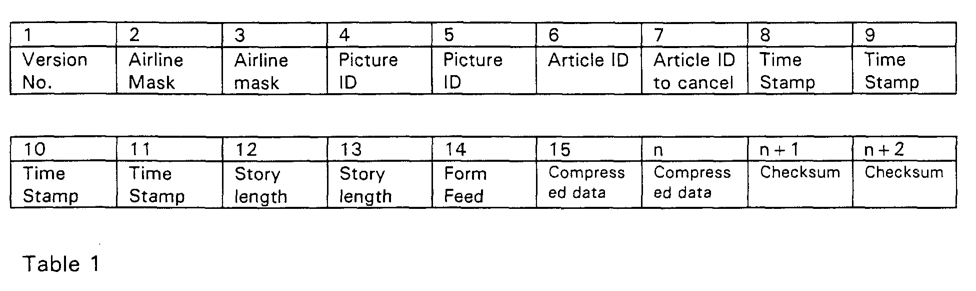

This format allows flexible allocation of news categories, the category definitions being pre-defined by a configuration file held by the news receiver 7. The first piece of data to be sent informs the onboard news receiver what version of news is to follow. This is important as different versions of news may have different functionality.

Two bytes of information are dedicated to defining which airlines have authority to receive the news article. The news receiver 7 running news processing software has a configuration file containing the airline details. If the airline mask data does not match that in the configuration file the news article will be rejected.

The picture ID is used to address the relevant data resource held in the library 8 associated with the news receiver 7. The news processing software will use this data to extract the corresponding data resource from the news receiver's library 8. Two bytes are allocated to this data which allows a total of 65,536 data resource identity codes to be allocated. A library of this size is considered sufficient as the news provider must select an appropriate illustration to attach to a news article. An optimum library size will therefore balance choice against the time taken to search the library for a suitable illustration.

The sixth and seventh bytes to be transmitted are the article ID and article ID to cancel respectively. The article ID determines the location of the news article in the complete 'newspaper'. The article to cancel ID gives the location of the article which should be overwritten, thus giving a mechanism by which news articles may be removed from the memory of the news receiver 7.

Bytes 8 to 11 are dedicated to a time stamp using a most significant bit first format. A time stamp is employed because during the working cycle of an aircraft, significant lengths of time may be spent without power in a hangar, during which news articles will not be updated. In order to prevent old news being presented to passengers when the aircraft is brought back into service, a retain time is defined and stored in the news server. If any news articles are older than the pre-determined age they will be deleted.

The actual size of the formatted news article will vary depending on the length of the news article itself, although there is a maximum length of 9 lines, each line containing 40 characters. The article length is defined at bytes 12 and 13, which are followed by a form feed signal indicating the start of the compressed news data. The data is completed by the addition of two checksum bytes.

A formatted news article is then compressed, stage 16, using for example Huffman coding, and further processed into CN50 format, stage 17. CN50 format is the standard P Channel data transmission protocol, whereby data is broken down into 9 byte packets and each packet given a rolling packet ID. Data transmission rates on the P Channel using CN50 format is 900 bits per second. The news transmitting tool forwards appropriately formatted data, stage 18, via the X.25 public switched network 4 to four Ground Earth Stations (only one shown, reference 5). Each of the four Ground Earth Stations (GES) transmit to a single INMARSAT satellite 6 in a geostationary orbit, providing coverage of the four main ocean regions.

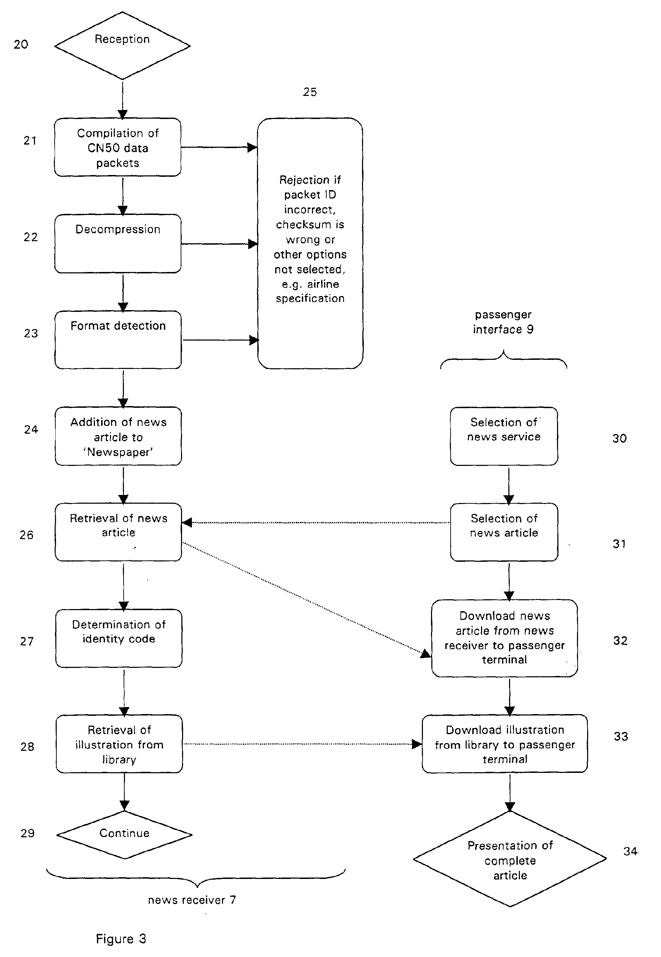

Figure 3 shows the process stages involved in the reception and presentation of news articles. The transmitted data is received, stage 20, by equipment onboard the aircraft which is provided for reception of Skyphone signals. Data packets sent via the P channel are then passed to the news receiver 7. The news receiver 7 takes the form of software running on at least one file server and performs CN50 and Huffman decoding, stages 21 and 22 respectively, to recreate news article data. As each CN50 packet is received the rolling packet ID is verified to ensure that the packets arrive in the correct order. In addition, the news processing software performs a checksum verification on the complete news article and compares this with the checksum field. A packet ID error or checksum error will cause the news article to be rejected, stage 25. The onboard news receiver 7 detects the format of the received data, stage 23, and assembles the data accordingly into a news article and including the data resource identity code. Also at this stage other options may be detected and the news article rejected if the criterion contained therein are not met, e.g. the airline in receipt of the news article does not subscribe to the particular format of news. At step 24, the news article is stored in memory along with other news articles, which together form a 'newspaper'. Stored news articles are then available for viewing when requested, as described below in stages 30 to 34.

The complete newspaper is made available to each passenger via one of a series of passenger terminals, 9',9",9"' etc. which may be provided to every passenger onboard the aircraft. The passenger terminal 9' etc consists of what is essentially a PC connected to a 'screen and paddle' type interface 9' etc. on the rear of the passenger seat in front. The paddle is provided with an array of controls for navigating around the news service as well as other interactive services that may be available. The paddle may also be provided with other controls which allow the passenger terminal 9' etc. to be used as a games console or a telephone. A credit card reader may also be provided integrally with the paddle to allow a passenger to purchase goods and services. The passenger interacts with software running on the passenger terminal 9' etc. Various modes of operation may be selected, including audio, video and interactive.

When the interactive mode is chosen and the news service is selected, stage 30, headlines of the available news articles are downloaded to the passenger terminal 9' etc. A passenger then selects a news article, stage 31, which is retrieved from the news server memory, stage 26, and downloaded to the passenger terminal 9' etc., stage 32. The data resource identity code associated with the news article is determined from the news article data, stage 27, and is used to retrieve the relevant illustration from the news receiver data resource library 8, stage 28, and the illustration is downloaded to the passenger terminal 9' etc., stage 33. The complete article, including the illustration, is then presented at the passenger terminal, stage 34.

Alternatively, a selected news article may be displayed with an option to view an image. This may be useful because the bandwidth of the link between the news receiver and the various passenger terminals 9' etc. is limited and therefore minimising the quantity of data transferred is desirable. A further alternative may be to offer the passenger an active thumbnail image or images embedded in the news article, allowing the passenger to make a more informed choice over whether or not to view the full illustration before it is downloaded.

## Claims

1. A method of presenting a selected data resource to a remote user, the method comprising:
selecting a data resource held in a first data resource library,
identifying an identity code of the selected data resource,
transmitting the identity code of the selected data resource and other data to a remote user,
retrieving a data resource having an associated identity code corresponding to the transmitted identity code from a second data resource library held by the remote user,
presenting the retrieved data resource and the other data to the remote user.

2. A method of presenting a selected data resource to a remote user as claimed in claim 1, wherein the other data comprises mainly textual information.

3. A method of presenting a selected data resource to a remote user as claimed in claim 1 or 2, wherein the retrieved data resource is presented in composite form with textual material.

4. A method of presenting a selected data resource to a remote user as claimed in claim 1 or 2, wherein a link to the retrieved data resource is presented in composite form with textual material.

5. A method of presenting a selected data resource to a remote user as claimed in any one of claims 1 to 4, wherein the selected data resource and retrieved data resource is an image, video clip or sound file.

6. A method of presenting a selected data resource to a remote user as claimed in any one of claims 1 to 5, wherein the selected data resource identity code and other data are transmitted via a satellite communication channel.

7. A method of presenting a selected data resource to a remote user as claimed in any one of claims 1 to 6, wherein the remote user is located in an aircraft.

8. Apparatus for presenting a selected data resource to a remote user, the apparatus comprising:
a base station having a first data resource library, wherein each component data resource of the first data resource library has an identity code,
means for transmitting the identity code of a selected data resource held in the first data resource library and other data to a remote station,
the remote station having
means for receiving the transmitted identity code of the selected data resource and other data,
a second data resource library, and
means for retrieving a data resource held in the second data resource library by using the transmitted identity code of the selected data resource to identify the data resource to be retrieved, and
means for presenting the retrieved data resource and the other data to a user.

9. Apparatus for presenting a selected data resource to a remote user as claimed in claim 8, wherein the other data comprises mainly textual information.

10. Apparatus for presenting a selected data resource to a remote user as claimed in claim 8 or 9, arranged in operation to present the retrieved data resource in composite form with textual material.

11. Apparatus for presenting a selected data resource to a remote user as claimed in claim 8 or 9, arranged in operation to present a link to the retrieved data resource in composite form with textual material.

12. Apparatus for presenting a selected data resource to a remote user as claimed in any one of claims 8 to 11, wherein the selected data resource and retrieved data resource is an image, video clip or sound file.

13. Apparatus for presenting a selected data resource to a remote user as claimed in any one of claims 8 to 12, wherein the data resource identity code and other data are transmitted via a satellite communication channel.

14. Apparatus for presenting a selected data resource to a remote user, the apparatus comprising:
a base station having a data resource library, wherein each component data resource of the data resource library has an identity code,
means for transmitting the identity code of a selected data resource held in the data resource library and other data to a remote station.

15. Apparatus for presenting a selected data resource to a remote user, the apparatus comprising:
a remote station having
means for receiving a transmitted identity code of a selected data resource,
a data resource library, and
means for retrieving a data resource held in the data resource library by using the transmitted identity code of the selected data resource to identify a data resource to be retrieved, and
means for presenting the retrieved data resource and the other data to a user.

16. Apparatus for presenting a selected data resource to a remote user as claimed in claim 14 or 15, wherein the other data comprises mainly textual information.

17. Apparatus for presenting a selected data resource to a remote user as claimed in claim 15 or 16, wherein the retrieved data resource is presented in composite form with textual material.

18. Apparatus for presenting a selected data resource to a remote user as claimed in any one of claims 15 to 17, wherein a link to the retrieved data resource is presented in composite form with textual material.

19. Apparatus for presenting a selected data resource to a remote user as claimed in any one of claims 14 to 18, wherein the selected data resource and retrieved data resource is an image, video clip or sound file.
